# EUROPÄISCHE PATENTSCHRIFT

(11) **EP 0 875 191 B1**
(45) Veröffentlichungstag und Bekanntmachung des Hinweises auf die Patenterteilung: **25.08.1999**
(21) Anmeldenummer: 98105379.6
(22) Anmeldetag: 25.03.1998
(51) Int. Cl.: A47J 43/08

(54) **Stabmixer und Verfahren zur Montage eines Stabmixers**
Mixing rod and method for mounting a mixing rod
Pied mélangeur et méthode pour monter un pied mélangeur

(30) Priorität: 30.04.1997 DE 19718482
(43) Veröffentlichungstag der Anmeldung: 04.11.1998
(73) Patentinhaber: Braun Aktiengesellschaft, Frankfurt am Main (DE)
(72) Erfinder: Penaranda, Mariano, 08005 Barcelona (ES); Masip, Josep M., 08035 Barcelona (ES); Rafols, Robert, Barcelona (ES); Carreras, Francesc, 08960 Sant Just Desvern, Barcelona (ES)

(56) Entgegenhaltungen:
- CH-A- 604 654
- DE-A- 3 709 573
- DE-B- 1 091 719

## Beschreibung

Die vorliegende Erfindung betrifft einen Stabmixer mit einer Elektromotoreinheit, die in einem Gehäuse aufgenommen ist und ein Verfahren zu dessen Montage.

Aus der DE 37 09 573 ist ein derartiger Stabmixer bereits bekannt. Hierbei ist ein Gehäuse vorgesehen, daß einteilig mit einem Pürierstab verbunden ist, und in dessen Hohlraum eine Elektromotoreinheit aufgenommen ist. Die seinerseits mit einer Gehäuseummantelung versehene Elektromotoreinheit ist an ihrem dem Pürierstab als anzutreibende Einrichtung zugewandten Ende mit einer Antriebsankupplung verbunden und über ein im Querschnitt winkelförmiges, elastisches Ringelement auf dem Gehäuse gelagert. Am hierzu axial engegengesetzten Ende der Elektromotoreinheit ist ein Kunststofflagerteil in Kontakt mit diesem axialen Ende der Elektromotoreinheit, das über Verbindungen zur Gehäusewand für eine seitliche und axiale Fixierung der Elektromotoreinheit sorgt. Ein ähnlicher Stabmixer gemäß dem Oberbegriff des Anspruchs 1 und ein Verfahren gemäß dem Oberbegriff des Anspruchs 7 ist aus der DE-B-1091719 bekannt.

Dadurch, daß bei dieser bekannten Ausführungsform die Elektromotoreinheit am zum Pürierstab abgewandten Ende im wesentlichen starr mit dem Gehäuse verbunden ist und am anderen axialen Ende elastisch am Gehäuse gelagert ist, muß sowohl die Elektromotoreinheit als auch die diese mit dem Gehäuse verbindenden Teile in engen Fertigungstoleranzen hergestellt werden. Der Produktionsaufwand wird zusätzlich durch einen relativ hohen Montageaufwand und Herstellaufwand an Lagerteilen erhöht.

Es ist daher eine Aufgabe der vorliegenden Erfindung einen Stabmixer der eingangs genannten Art bereitzustellen, bei dem eine einfache Verbindung zwischen der Elektromotoreinheit und dem Stabmixergehäuse geschaffen ist, so daß beide Teile mit geringem Montageaufwand verbindbar sind und beide Teile aufgrund deren Verbindung nicht engen Fertigungstoleranzen unterliegen.

Diese Aufgabe wird durch einen Stabmixer mit den Merkmalen des Anspruches 1 gelöst. Dadurch daß erfindungsgemäß die Elektromotoreinheit nur an einem ihrer beiden axialen Endbereiche am Gehäuse gelagert ist, unterliegt die Elektromotoreinheit durch ihre Befestigung am Gehäuse keinen engen Fertigungstoleranzen, wobei bei einer einseitigen Lagerung der Elektromotoreinheit zusätzlich der Zusammenbau erleichtert wird.

Erfindungsgemäß ist der zur anzutreibenden Einrichtung, z.B. einem Pürierstab, abgewandte Abschnitt der Elektromotoreinheit und der Mantelbereich der Elektromotoreinheit freihängend im Stabmixergehäuse befestigt. Demnach ist die Elektromotoreinheit ausschließlich in einem vordersten, das heißt zur anzutreibenden Einrichtung zugewandten Abschnitt mit dem Gehäuse fest verbunden, wodurch Vibrationsübertragungen vom Elektromotor auf das Gehäuse konstruktiv einfach unterbindbar sind, und ein wärmeisolierender Luftspalt zwischen dem Mantelgehäuse der Elektromotoreinheit und der Innenwand des Stabmixergehäuses gegeben ist.

In weiterer vorteilhafter Ausführung der Erfindung ist die Elektromotoreinheit an dem Gehäuse mittels einer Schnapp- oder Rastverbindung befestigt. Somit ist eine vereinfachte Montage durch Zusammenstecken beider Teile möglich.

Diese Rastverbindung ist in vorteilhafter Weise zwischen einer Motorankupplung, die Bestandteil des Gehäuses der Elektromotoreinheit am zur anzutreibenden Einrichtung zugewandten Ende ist, und einer Gehäuseankupplung, die Bestandteil des Gehäuses des Stabmixers am zur anzutreibenden Einrichtung zugewandten Ende ist, gebildet.

Erfindungsgemäß ist eine einzige Ringdichtung vorgesehen um das Gehäuseinnere zwischen der Elektromotoreinheit und dem Gehäuse abzudichten.

In vorteilhafter Weiterbildung der Erfindung ist die Schnapp- oder Rastverbindung derart angeordnet, daß die Ringdichtung bei eingerasteter Schnapp- oder Rastverbindung zusammengedrückt ist. Damit ist einerseits ein relativ fester Sitz der Elektromotoreinheit im Gehäuse und andererseits eine Kompensation von Motorvibrationen möglich. Ferner gleicht der eingespannte Gummiring Toleranzen zwischen der Motorankupplung und der Gehäuseankupplung aus, wobei gleichzeitig ein wasserdichter Abschluß zum Gehäuseinneren hergestellt ist.

Es ist ferner eine Aufgabe der vorliegenden Erfindung ein Verfahren zur Montage einer Elektromotoreinheit in einem Gehäuse eines Stabmixers bereitzustellen, das mit geringem Aufwand durchführbar ist.

Diese Aufgabe wird durch ein Verfahren mit dem Merkmal des Anspruchs 7 gelöst. Durch die einseitige Lagerung der Elektromotoreinheit am Gehäuse entfällt die Montage eines weiteren Lagerteils, das ebenfalls am Gehäuse befestigt werden müßte, so daß der Montageaufwand reduziert ist, wobei das Einrasten der Elektromotoreinheit am Stabmixergehäuse mittels einer Schnapp- oder Rastverbindung zu einfachen Montage beiträgt.

Weitere vorteilhafte Ausfürungsformen der Erfindung sind in den Unteransprüchen dargestellt.

Nachfolgend wird die Erfindung anhand eines Ausführungsbeispiels in den Zeichnungen näher erläutert. In diesen zeigen:
- Fig. 1: einen Längsschnitt durch das Gehäuse eines erfindungsgemäßen Stabmixers mit einer Seitenansicht einer eingebauten Elektromotoreinheit,
- Fig. 2: eine Seitenansicht einer Elektromotoreinheit, die mit einem Gehäuseteil nach Fig. 1 verbunden ist,
- Fig. 3: eine räumliche Zusammenbaudarstellung der Elektromotoreinheit und des Gehäuseteils nach Fig. 2.

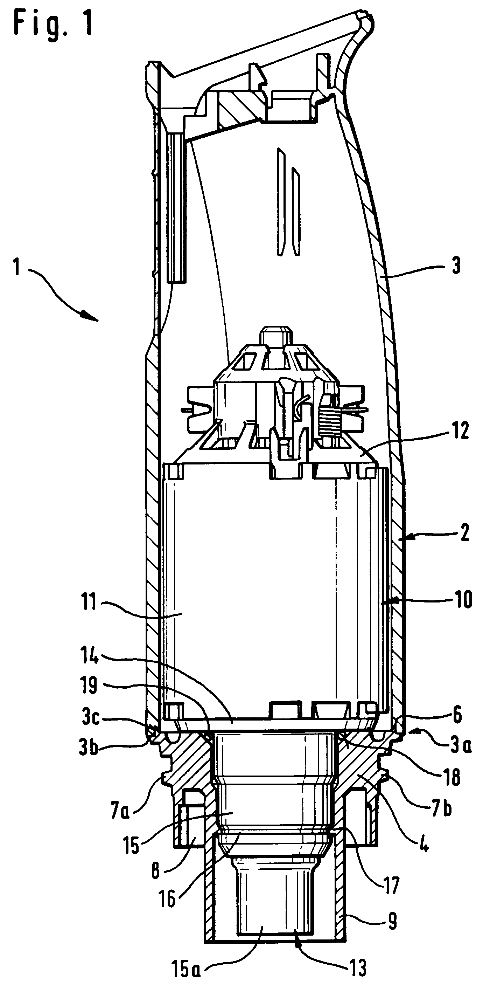

Die Fig. 1 zeigt einen Längsschnitt durch ein Gehäuse 2 eines Stabmixers 1, wobei die anzutreibende Einrichtung des Stabmixers beispielsweise ein Pürierstab in Fig. 1 nicht dargestellt ist.

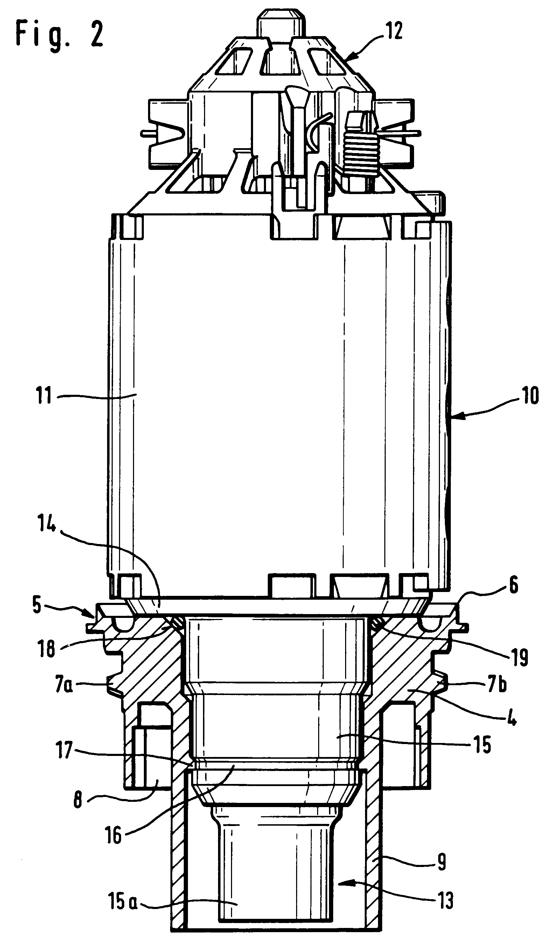

Das Gehäuse 2 weist einen im wesentlichen hohlzylindrischen Handgriff 3 auf, das an dem der anzutreibenden Einrichtung abgewandten axialen Ende nach außen abgeschlossen ist. An dem der anzutreibenden Einrichtung zugewandten axialen Ende des Handgriffes 3 schließt das Gehäuse 2 mit einem weiteren Teil, der Gehäuseankupplung 4 ab. Im Verbindungsbereich zwischen dem Handgriff 3 und der Gehäuseankupplung 4 (siehe hierzu auch Fig. 2) weist der Handgriff 3 eine hohlzylindrische Gehäusewand auf deren Innendurchmesser im Abschlußbereich 3a vergrößert ist, während der Außendurchmesser des Handgriffes 3 gleicht bleibt. Die Endfläche 3b der Gehäusewandung des Handgriffes 3 und die mit vergrößertem Innendurchmesser versehene Innenseite 3c des Handgriffes 3 benachbart zur Endfläche 3b bilden die Verbindungsfläche zu einer ringförmigen, im Querschnitt L-förmigen Flanschfläche 5 der Gehäuseankupplung 4. Das im Querschnitt L-förmige Ende der Flanschfläche 5 ist zusätzlich an seiner zur anzutreibenden Einrichtung abgewandten Seite mit einer ringförmigen vorstehenden Spitze 6 und einer radial nach innen ausgebildeten Hinterschneidung versehen, so daß bereits durch ein sehr festes Aufdrücken des Handgriffes 3 auf die Flanschfläche 5 eine Klemmverbindung gegeben ist. Fest verbunden werden schließlich der Handgriff 3 mit der Gehäuseankupplung 4 über eine Rotationsverschweißung oder eine Verklebung.

Die Gehäuseankupplung 4 weist an ihrer Umfangsfläche Vorsprünge 7a, 7b auf, die derart ausgebildet sind, daß ein Pürierstab oder ein Zerkleinerungsbehälter oder eine sonstige anzutreibende Einrichtung anschraubbar ist. Zur zusätzlichen Lagefixierung der angekoppelten anzutreibenden Einrichtung sind an der Gehäuseankupplung 4 eine Ringnut 8 und eine weitere, radial innere, sich axial zur anzutreibenden Einrichtung erstreckende hohlzylindrische Gehäusewand 9 vorgesehen.

In einem im wesentlichen zylindrischen Hohlraum in der Gehäuseankupplung 4 und in einem zylindrischen Hohlraum des Handgriffes 3 ist eine Elektromotoreinheit 10 aufgenommen. Die Elektromotoreinheit 10 weist eine zylindrische Metall-Gehäuseummantelung 11 und eine Kunststoff-Endkappe 12 an einem der beiden axialen Enden der Elektromotoreinheit 10 auf, wobei die Endkappe 12 einen in der Zeichnung nicht dargestellten Kommutator überdeckt und Kohlebürsten zum elektrischen Abgriff aufnimmt. Die Endkappe 12 schließt im wesentlichen die Elektromotoreinheit zu der axialen Seite hin ab, die von der anzutreibenden Einrichtung abgewandt ist, so daß noch etwa ein Dittel bis zur Hälfte des Hohlraumes im Handgriff 3 nicht von der Elektromotoreinheit 10 besetzt sind und für eine Platine und weitere Stabmixerkomponenten zur Verfügung stehen. Weder die Endkappe 12 noch die Gehäuseummantelung 11 sind am Handgriff 3 befestigt. Die mit der Endkappe 12 in Verbindung stehende Platine ist in axialer Richtung auf die Endkappe aufgeschoben und bietet über einen größeren axialen Bereich eine Kontaktfläche zum elektrischen Anschluß an den Motor. Durch die Platine ist ebenfalls keine Eingrenzung der Längstoleranzen des Elektromotors gegeben, da das zum Elektromotor gegenüberliegende Ende der Platine mit Verbindungselementen zur Spannungsversorgung verbunden ist, die die Platine ebenfalls vor allem in axialer Richtung des Stabmixers verschieblich aufnehmen. Zwischen der Gehäuseummantelung 11 und der Innenseite des Handgriffes 3 ist ein Luftspalt vorgesehen, der eine unerwünschte Wärmeübertragung zwischen dem Motor und dem Handgriff 3 verhindert.

Neben der Endkappe 12, der Motorgehäuseummantelung 11 und dem Motor selbst weist die Elektromotoreinheit 10 an ihrem der anzutreibenden Einrichtung zugewandten Ende eine Motorankupplung 13 auf, in der die Motorwelle mit ihrer Antriebsverzahnung gelagert ist. Über die Motorankupplung 13 wird die Welle der anzutreibenden Einrichtung an den Motorantrieb bzw. die Elektromotoreinheit 10 angekoppelt. Die Motorankupplung 13 ist einstückig durch eine Motorabschlußplatte 14 und einen abwechselnd zylindrischen und sich konisch verjüngenden Zylinderabschnitt 15 gebildet. Die Platte 14 ist an der Gehäuseummantelung 11 unmittelbar befestigt und ist im Außendurchmesser kleiner als die Gehäuseummantelung 11. Von einem radial inneren Abschnitt der Platte 14 ausgehend ist ein Zylinderabschnitt senkrecht zur Platte 14 in Richtung zur anzutreibenden Einrichtung ausgebildet, der sich im weiteren Verlauf konisch verjüngt, dann zylindrisch fortgesetzt wird, sich erneut leicht konisch verjüngt, in einem kurzen Bereich zylindrisch fortgesetzt wird und sich im weiteren Verlauf sprunghaft radial erweitert und zylindrisch fortgesetzt wird, so daß eine ringförmige Rille bzw. Rastnut 16 für eine Rast- bzw. Schnappverbindung gebildet ist. Im weiteren Verlauf zu der anzutreibenden Einrichtung ist ein konischer Abschnitt an der Motorankupplung ausgebildet, der mit einem hohlzylindrischen Abschnitt schließlich zur anzutreibenden Einrichtung hin mit dem insgesamt kleinstem Radius des Zylinderabschnitts 15 abschließt.

Die im wesentlichen hohzylindrische Innenwandung der Gehäuseankupplung 4 weist eine ringförmige Rastnase 17 auf, die in der Form - nicht jedoch in der Dimensionierung - zur Rastnut 16 der Motorankupplung korrespondiert, so daß der zur anzutreibenden Einrichtung zugewandte Abschnitt der Rastnase bzw. des Rastringes 17 einen senkrecht zur Antriebsachse ausgerichteten Wandungsabschnitt aufweist und der in entgegengesetzter Richtung weisende Abschnitt sich konisch erweitert. Die Innenwandung der Gehäuseankupplung 4 weist - im weiteren, zur anzutreibenden Einrichtung abgewandten Verlauf - zwei zylindrische Abschnitte auf, die abgesehen von einem axialen Versatz mit denen der Motorankupplung korrespondieren. Die Gehäuseankupplung weitet sich darauf hin konisch in einem 45° Winkel zur zuvor achsparallelen Gehäusewandung auf und verläuft schließlich nach einem weiteren 45° Knick parallel zur Platte 14. Es ist somit durch diese ringförmige Anphasung 18, die Platte 14 und den zylindrischen Abschnitt 15 der Motorankupplung eine ringförmiger Spalt, der im Querschnit die Form eines gleichschenkligen Dreieckes aufweist, gebildet, indem eine Ringdichtung 19 eingesetzt ist. Die Ringdichtung 19 ist als Gummi-O-Ring ausgebildet. Sowohl in der Schnapp- bzw. Rastverbindung zwischen der Rastnase 17 und der Rille bzw. Rastnut 16, als auch an den zueinander konzentrischen Gehäusewandungen, zwischen der Innenwandung der Gehäuseankupplung 4 und den zylindrischen Abschnitten der Motorankupplung 13, sowie zwischen der Platte 14 und der unmittelbar gegenüberliegenden Abschnitte der Gehäuseankupplung ist ein geringes Spiel von wenigen zehntel Millimetern gegeben. Es ist besonders darauf hingewiesen, daß die Schnapp- bzw. Rastverbindung keine starre Verbindung zwischen der Motorankupplung und der Gehäuseankupplung herstellt, so daß zwar die Ringdichtung 19 bei einer Verbindung zwischen beiden Teilen leicht zusammengedrückt wird, aufgrund des geringen axialen und seitlichen Spieles jedoch sowohl axial als auch seitlich wirkende Motorvibrationen dämpfend ausgleicht. Die Ringdichtung 19 verhindert weiterhin einen Flüssigkeitseintritt in das Gehäuseinnere und erfordert keine enge Fertigungstolerierung der Maße zwischen den beiden Kunststoffteilen der Gehäuseankupplung 4, die aus Polypropylen mit gröberen Toleranzen herstellbar ist, als die Motorankupplung 13 die aus glasfaserverstärktem Polyamid mit kleineren Toleranzen herstellbar ist. Die Elektromotoreinheit ist mittels einer Verspannungseinrichtung (gebildet durch eine Seite der Rast- bzw. Schnappverbindung und eine Seite der Ringdichtung) im Stabmixergehäuse derart axial eingespannt befestigt, daß axiale und axial schwenkende Motorvibrationen schon durch diese einseitige Lagerung ideal durch den elastischen Teil der Verspannungseinrichtung, der Ringdichtung 19, absorbiert werden.

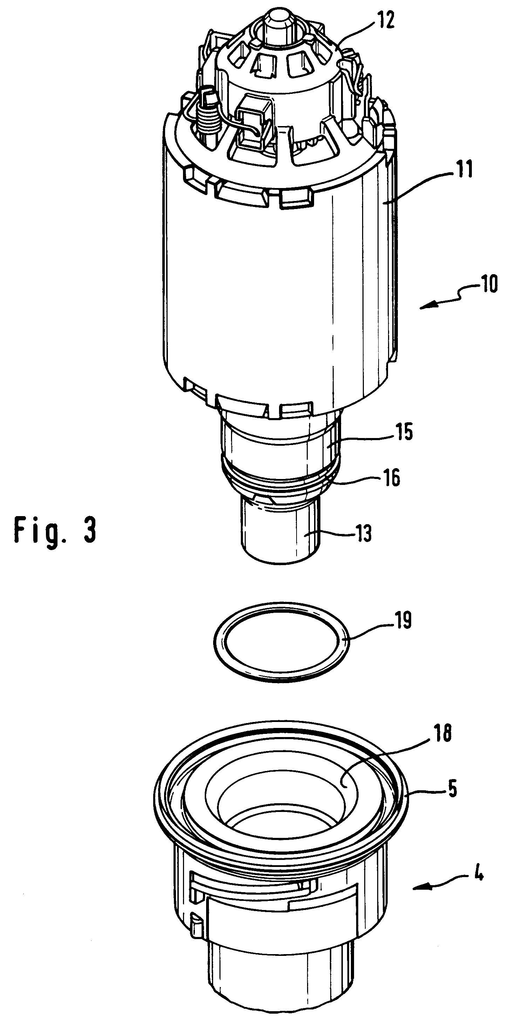

Wie aus Fig. 3 hervorgeht, wird zur Montage lediglich die Ringdichtung auf die Phase 18 der Gehäuseankupplung aufgelegt und anschließend die Elektromotoreinheit in die Gehäuseankupplung 4 eingeführt bis beide miteinander verrastet sind. Anschließend wird der Handgriff 3 auf die Flanschfläche 5 der Gehäuseankupplung 4 aufgesetzt und mittels einer Rotationsverschweißung oder einer Verklebung verbunden.

## Patentansprüche

1. Stabmixer mit einer längs dessen Achse ausgerichteten Elektromotoreinheit (10), die in einem Gehäuse (2) aufgenommen ist, **dadurch gekennzeichnet**, daß die Elektromotoreinheit (10) nur an einem ihrer beiden axialen Endbereiche am Gehäuse (2) gelagert ist.

2. Stabmixer nach Anspruch 1, **dadurch gekennzeichnet**, daß der zur anzutreibenden Einrichtung abgewandte Abschnitt der Elektromotoreinheit (10) und der Mantelbereich (11) der Elektromotoreinheit freihängend im Gehäuse (2) befestigt sind.

3. Stabmixer nach Anspruch 1, **dadurch gekennzeichnet**, daß die Elektromotoreinheit (10) an dem Gehäuse (2) mittels einer Schnapp- oder Rastverbindung befestigt ist.

4. Stabmixer nach Anspruch 3, **dadurch gekennzeichnet**, daß die Elektromotoreinheit (10) eine Motorankupplung (13) und das Gehäuse (2) eine Gehäuseankupplung (4) aufweisen, die jeweils zur Ankupplung an die anzutreibende Einrichtung vorgesehen sind, und daß die Rastverbindung zwischen einen Rastnasenring (17) an der Gehäuseankupplung (4) und einer im wesentlichen korrespondierenden Rastnut (16) in der Motorankupplung (13) gebildet ist.

5. Stabmixer nach Anspruch 1 bis 4, **dadurch gekennzeichnet**, daß zwischen der Elektromotoreinheit und dem Gehäuse eine einzige Ringdichtung (19) angeordnet ist.

6. Stabmixer nach Anspruch 5, **dadurch gekennzeichnet**, daß die Schnapp-oder Rastverbindung derart angeordnet ist, daß die Ringdichtung (19) bei eingerasteter Schnapp- oder Rastverbindung zusammengedrückt ist.

7. Verfahren zur Montage einer Elektromotoreinheit in ein Gehäuse eines Stabmixers gemäß Anspruch 1, **dadurch gekennzeichnet**, daß die Elektromotoreinheit an einem ihrer beiden axialen Endbereiche am Gehäuse eingerastet wird.

8. Verfahren nach Anspruch 7, **dadurch gekennzeichnet**, daß die Elektromotoreinheit in einem ersten Schritt mit einer Gehäuseankupplung verbunden wird, die den zur anzutreibenden Einrichtung zugewandten Gehäuseabschluß bildet, wobei ein Dichtring an die Gehäuseankupplung eingelegt wird und die Elektromotoreinheit in die Gehäuseankupplung eingerastet wird so daß der Dichtring zwischen der Elektromotoreinheit und der Gehäuseankupplung zusammengedrückt wird.

9. Verfahren nach Anspruch 8, **dadurch gekennzeichnet**, daß in einem zweiten Schritt die Gehäuseankupplung mit einem im wesentlichen hohlzylindrischen Gehäuseteil durch Rotationsverschweißung oder Verschweißung verbunden wird.

## Claims

1. A hand-held blender with an electric motor unit (10) aligned along the blender axis and received in a housing (2), **characterized in that** the electric motor unit (10) has only one of its two axial end sections supported on the housing (2).

2. The hand-held blender according to claim 1, **characterized in that** the section of the electric motor unit (10) at the end remote from the driven device and the enclosure (11) of the electric motor unit are fixed in the housing (2) in a freely suspended manner.

3. The hand-held blender according to claim 1, **characterized in that** the electric motor unit (10) is fastened to the housing (2) by means of a snap-fit or latching connection.

4. The hand-held blender according to claim 3, **characterized in that** the electric motor unit (10) has a motor coupling (13) and the housing (2) has a housing coupling (4) each intended for coupling engagement with the driven device, and that the latching connection is formed between an annular detent nose (17) on the housing coupling (4) and an essentially corresponding notch (16) in the motor coupling (13).

5. The hand-held blender according to claims 1 to 4, **characterized in that** a single sealing ring (19) is arranged between the electric motor unit and the housing.

6. The hand-held blender according to claim 5, **characterized in that** the snap-fit or latching connection is arranged such that the sealing ring (19) is compressed with the snap-fit or latching connection engaged.

7. A method of mounting an electric motor unit in a housing of a hand-held blender according to claim 1, **characterized in that** the electric motor unit is latched onto the housing in one of its two axial end areas.

8. The method according to claim 7, **characterized by** a first step involving connection of the electric motor unit with a housing coupling forming the housing end on the side close to the driven device, in which a sealing ring is inserted in the housing coupling and the electric motor unit is snap-fitted into the housing coupling, causing the sealing ring to be compressed between the electric motor unit and the housing coupling.

9. The method according to claim 8, **characterized by** a second step involving joining of the housing coupling to an essentially hollow-cylindrical housing portion by spin welding or welding.

## Revendications

1. Mixeur à tige comportant une unité à moteur électrique (10), qui s'étend le long de l'axe longitudinal du mixeur et est logée dans un carter (2), caractérisé en ce que l'unité à moteur électrique (10) est tourillonnée uniquement au niveau de l'une de ses deux parties d'extrémité axiales, sur le carter (2).

2. Mixeur à tige selon la revendication 1, caractérisé en ce que la section, située à l'opposé du dispositif devant être entraîné, de l'unité à moteur électrique (10) et la partie formant enveloppe (11) de l'unité à moteur électrique sont fixées à l'état suspendu libre dans le carter (2).

3. Mixeur à tige selon la revendication 1, caractérisé en ce que l'unité à moteur électrique (10) est fixée au carter (2) au moyen d'une liaison à déclic ou à encliquetage.

4. Mixeur à tige selon la revendication 3, caractérisé en ce que l'unité à moteur électrique (10) comporte un accouplement (13) du moteur et le carter (2) comporte un accouplement (4) du carter, ces accouplements étant destinés respectivement à s'accoupler au dispositif devant être entraîné, et que la liaison à encliquetage est formée entre une bague formant ergot d'encliquetage (17) située sur l'accouplement (4) du carter et un écrou d'encliquetage essentiellement correspondant (16) dans l'accouplement (13) du moteur.

5. Mixeur à tige selon les revendications 1 à 4, caractérisé en ce qu'une seule bague annulaire d'étanchéité (19) est disposée entre l'unité à moteur électrique et le carter.

6. Mixeur à tige selon la revendication 5, caractérisé en ce que la liaison à déclic ou la liaison à encliquetage est disposée de telle sorte que la bague annulaire d'étanchéité (19) est comprimée lorsque la liaison à déclic ou la liaison à encliquetage est encliquetée.

7. Procédé pour le montage d'une unité à moteur électrique dans un carter d'un mixeur à tige selon la revendication 1, caractérisé en ce qu'on encliquette l'unité à moteur électrique sur le carter au niveau de l'une de ses deux parties d'extrémité axiales.

8. Procédé selon la revendication 7, caractérisé en ce que lors d'une première étape, on relie l'unité à moteur électrique à un accouplement du carter, qui forme le système de fermeture du carter tourné vers le dispositif devant être entraîné, et selon lequel on insère une bague d'étanchéité dans l'accouplement du carter et on encliquette l'unité à moteur électrique dans l'accouplement du carter de sorte que la bague d'étanchéité est comprimée entre l'unité à moteur électrique et l'accouplement du carter.

9. Procédé selon la revendication 8, caractérisé en ce que lors d'une seconde étape, on relie l'accouplement du carter au moyen d'un soudage par rotation ou d'un soudage sur une partie essentiellement cylindrique creuse du carter.
